# DEMANDE DE BREVET EUROPEEN

(11) **EP 4 552 904 A1**
(43) Date de publication de la demande: **14.05.2025**
(21) Numéro de dépôt: 24209023.1
(22) Date de dépôt: 25.10.2024
(51) Int. Cl.: B60L 50/75, B60L 53/10, B60L 58/40, H01M 16/00, H02J 7/34

(54) **SYSTÈME D'ENTRAINEMENT DE VÉHICULE ET PROCÉDÉ DE CHARGEMENT**

(30) Priorité: 26.10.2023 FR 2311678
(71) Demandeur: ALSTOM Holdings, 93400 Saint-Ouen-sur-Seine (FR)
(72) Inventeur: THEUX, Julien, 65600 SEMEAC (FR)
(74) Mandataire: Plasseraud IP

(57) **Abrégé**

L'invention a pour objet un système d'entraînement (30) de véhicule (20), tel qu'une locomotive. Le système d'entraînement comprend:
- un moteur électrique d'entraînement (32) pour entraîner le véhicule ;
- un convertisseur DC/DC (40) ;
- une batterie d'entraînement (36) configurée pour alimenter le moteur d'entraînement et connectée au convertisseur DC/DC ;
- une pile à combustible (38) apte à alimenter le moteur d'entraînement via le convertisseur DC/DC ;
- des moyens de connexion (42) reliant la pile à combustible au convertisseur DC/DC ;
- un dispositif de chargement externe (45) connecté aux moyens de connexion et destiné à être relié à une source extérieure (48), comme un réseau électrique dans un bâtiment, de manière à recharger la batterie d'entraînement via le convertisseur DC/DC.

L'invention a également pour objet un procédé de chargement de la batterie ainsi qu'un programme d'ordinateur.

## Description

La présente invention concerne un système d'entraînement électrique pour véhicule. Plus précisément, l'invention traite d'un système d'entraînement comprenant un moteur électrique alimenté par une pile à combustible et une batterie. L'invention traite également d'un véhicule équipé d'un système d'entraînement. L'invention propose en outre un procédé de rechargement d'une batterie électrique d'un système électrique également muni d'une pile à combustible. L'invention propose par ailleurs un programme d'ordinateur pour recharger une batterie de système d'entraînement.

Un véhicule à entraînement électrique présente d'une part un moteur électrique permettant de le propulser, et des moyens d'alimentation électrique. Ces moyens d'alimentation électrique peuvent être mixtes en ce sens qu'un même véhicule peut comporter à la fois une pile à combustible et une batterie électrique. Combiner ces sources primaires d'énergie permet d'allonger l'autonomie du véhicule, tout en augmentant les pics de puissance disponibles en phase d'accélération. Par ailleurs, le recours à la pile à combustible optimise le temps de chargement, le coût, et la masse nécessaire pour accumuler l'énergie motrice. En outre, la présence de la batterie autorise une récupération d'énergie par freinage du véhicule. Dans certains modes de fonctionnement, une partie de l'énergie produite par la pile à combustible est employée pour recharger la batterie ; et ce pendant la circulation du véhicule.

Le document DE102019210323A1 divulgue un système d'entraînement pour un véhicule électrique. Le véhicule est propulsé par un moteur électrique qui est alimenté par une pile à combustible ou une batterie électrique. Cette dernière peut être rechargée à l'aide d'un réseau externe afin d'augmenter l'autonomie du véhicule. Un convertisseur DC/DC adapte les niveaux de tensions. Or, cette solution nécessite des moyens supplémentaires. Cela augmente les coûts et l'encombrement général.

L'invention a pour objectif de résoudre au moins un des problèmes posés par l'art antérieur. L'invention a pour objectif de simplifier le chargement d'une batterie électrique d'un système d'entraînement d'un véhicule.

L'invention a pour objet un système d'entraînement de véhicule, notamment de véhicule ferroviaire, le système d'entraînement comprenant :
- un moteur électrique d'entraînement, ledit moteur électrique d'entraînement étant apte à entraîner le véhicule ;
- un convertisseur DC/DC ;
- une batterie d'entraînement configurée pour alimenter le moteur électrique d'entraînement et connectée au convertisseur DC/DC ;
- une pile à combustible apte à alimenter le moteur électrique d'entraînement via le convertisseur DC/DC ;
- des moyens de connexion reliant la pile à combustible au convertisseur DC/DC ;
caractérisé en ce qu'il comprend en outre un dispositif de chargement externe connecté aux moyens de connexion et destiné à être relié à une source extérieure de manière à recharger la batterie d'entraînement via le convertisseur DC/DC.

Suivant d'autres aspects avantageux de l'invention, le système comprend une ou plusieurs des caractéristiques suivantes, prises isolément ou suivant toutes les combinaisons techniquement possibles :
- le dispositif de chargement externe comprend un appareillage de commande configuré pour couper ou relier le convertisseur DC/DC à la source extérieure ;
- l'appareillage de commande comprend un contacteur ;
- l'appareillage de commande comprend un sectionneur ;
- l'appareillage de commande est un premier appareillage, les moyens de connexion comprenant en outre un deuxième appareillage configuré pour ouvrir et fermer les moyens de connexion entre le convertisseur DC/DC et la pile à combustible, le premier appareillage et le deuxième appareillage étant configurés de manière à sélectivement connecter le convertisseur DC/DC à la pile à combustible ou à la source extérieure ;
- le système comprend en outre un onduleur configuré pour charger la batterie d'entraînement par récupération d'énergie cinétique via le moteur électrique d'entraînement.

L'invention a également pour objet un véhicule comprenant un système d'entraînement et une enveloppe externe, caractérisé en ce que le système d'entraînement est conforme à l'une des revendications précédentes, et le dispositif de chargement externe comprend un connecteur d'interface au niveau de l'enveloppe externe du véhicule.

L'invention a également pour objet un procédé de chargement d'un véhicule comprenant un système d'entraînement, le système d'entraînement comprenant :
- un moteur électrique d'entraînement, ledit moteur électrique d'entraînement étant apte à entraîner le véhicule ;
- un convertisseur DC/DC ;
- une batterie d'entraînement configurée pour alimenter le moteur électrique d'entraînement et connectée au convertisseur DC/DC ;
- une pile à combustible apte à alimenter le moteur électrique d'entraînement via le convertisseur DC/DC ;
- des moyens de connexion reliant la pile à combustible au convertisseur DC/DC ; le procédé comprenant l'étape :
- chargement de la batterie d'entraînement par la pile à combustible ;
caractérisé en ce que le procédé comprend en outre une étape de
- chargement de la batterie d'entraînement par une source extérieure via les moyens de connexion.

Selon un mode avantageux de l'invention, le procédé comprend en outre une étape de comparaison d'un niveau de charge de la batterie d'entraînement à un seuil de chargement prédéfini, l'étape de chargement de la batterie d'entraînement par la source extérieure s'arrêtant lorsque le niveau de charge est supérieur ou égal au seuil de chargement prédéfini.

L'invention a également pour objet un produit programme d'ordinateur comprenant des instructions qui, lorsque le programme est exécuté par un ordinateur, conduisent celui-ci à mettre en oeuvre le procédé de chargement.

L'invention permet une réutilisation du convertisseur DC/DC qui coopère avec la pile à combustible. Ainsi, ce convertisseur a une double utilité. L'agencement selon l'invention permet une simplification du chargement dans la mesure où la tension disponible dans l'infrastructure externe est utilisée directement. En particulier, le branchement en amont du convertisseur DC/DC permet d'exploiter une tension plus basse que celle de la batterie, ce qui simplifie l'équipement nécessaire pour le raccordement à la source extérieure.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
[Fig 1] la figure 1 est une représentation simplifiée d'un système d'entraînement selon l'invention ; et
[Fig 2] la figure 2 est un diagramme d'un procédé de chargement d'un système d'entraînement selon l'invention.

Dans la présente demande de brevet, on entend par « entraînement » le fait de tracter ou de propulser un véhicule. L'entraînement permet au véhicule associé de circuler.

Le terme « pile à combustible » couvre une pile à combustible seule tout comme un empilement de piles à combustible.

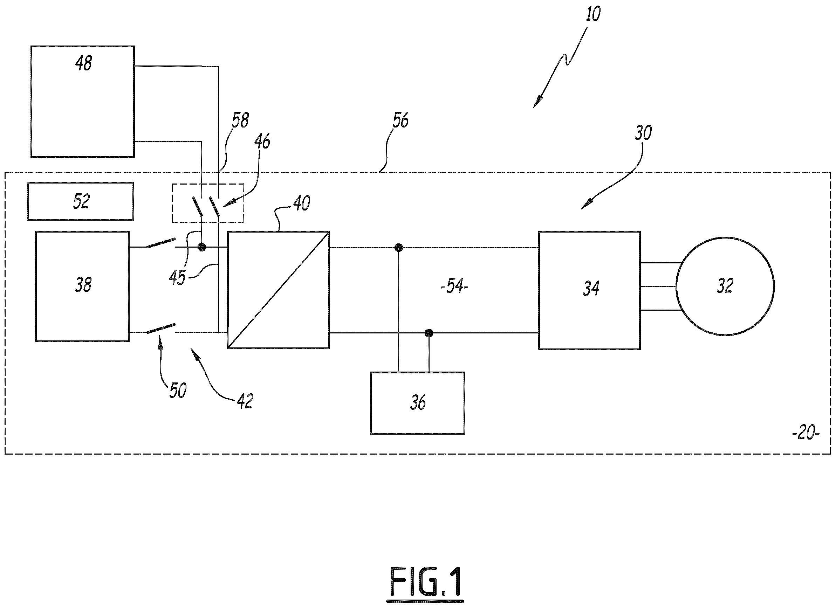

La figure 1 représente un système d'entraînement 30 d'un véhicule 20 dans une infrastructure de chargement 10. L'infrastructure de chargement 10 permet de charger et recharger électriquement une batterie du système d'entraînement 30. Elle peut comprendre un réseau électrique, également appelé source extérieure. La source extérieure fournit de l'énergie électrique utilisable pour charger une ou plusieurs batteries électriques. A titre d'illustration, la source extérieure présente une tension de 600 V continu.

Le véhicule 20 est un véhicule électrique en ce sens que son entraînement est assuré, totalement ou majoritairement, par de l'énergie électrique fournie à un moteur électrique d'entraînement 32 du système d'entraînement 30. L'alimentation électrique est hybride dans la mesure où elle est fournie par une batterie d'entraînement 36 et une pile à combustible 38. Le véhicule 20 est optionnellement autonome énergétiquement dans la mesure où il embarque des accumulateurs d'énergie suffisants pour son entraînement, et éventuellement l'entraînement d'un attelage entraîné par ledit véhicule. En particulier le véhicule 20 peut être une locomotive tractant plusieurs wagons y étant reliés.

La batterie d'entraînement 36 est connectée au moteur électrique d'entraînement 32 par l'intermédiaire d'un onduleur 34, et la pile à combustible 38 est connectée au moteur électrique d'entraînement 32 via l'onduleur 34 et un convertisseur DC/DC 40. La pile à combustible 38 est reliée électriquement au convertisseur DC/DC 40 par l'intermédiaire de moyens de connexion 42. Ces moyens de connexion 42 comprennent deux broches, une associée à la borne positive de la pile à combustible 38, et l'autre à la borne négative.

Le moteur électrique d'entraînement 32 convertit une énergie électrique en énergie mécanique afin d'actionner un ou plusieurs essieux (non représentés) du véhicule 20. Ainsi, le moteur électrique d'entraînement 32 permet au véhicule d'avancer. Le moteur électrique d'entraînement 32 est à courant alternatif, par exemple triphasé. Plus généralement, il peut être un machine électrique tournante. Elle peut être réversible, et générer de l'énergie électrique par récupération d'énergie cinétique du véhicule 20. L'énergie électrique produite est de type alternatif. L'onduleur 34 est configuré de manière à convertir du courant alternatif en courant continu ; et inversement. L'onduleur 34 comprend un convertisseur AC/DC.

La pile à combustible 38 fournit du courant continu, par exemple à une tension de 600V, ou plus généralement à la tension du même ordre qu'une source extérieure d'énergie électrique 48. La pile à combustible 38 est un dispositif générant une tension électrique par oxydation, sur une électrode, d'un combustible réducteur ; et par réduction sur une autre électrode d'un oxydant. Par exemple le réducteur et l'oxydant sont du dihydrogène et de l'oxygène respectivement. La pile à combustible peut être une pile à hydrogène.

Le convertisseur DC/DC 40 est apte à convertir un courant continu en un courant continu d'une autre tension ; par exemple supérieure. Il peut s'agir d'un hacheur élévateur. Le convertisseur DC/DC 40 est configuré de manière à augmenter la tension fournie par la pile à combustible 38 à une tension supérieure afin d'alimenter le moteur d'entraînement 32.

La batterie d'entraînement 36 est également appelée batterie principale, et alimente le circuit électrique d'entraînement 54. Le circuit électrique d'entraînement 54 comporte des liaisons électriques afin de relier la batterie d'entraînement 36 ainsi que le convertisseur DC/DC 40 à l'onduleur 34 selon un montage en parallèle. Elle présente une tension nominale supérieure à la tension de la pile à combustible 38. La batterie d'entraînement 36 est connectée indirectement au moteur 32, par l'intermédiaire de l'onduleur 34. Le véhicule 20 comprend optionnellement une deuxième batterie (non représentée), ou batterie auxiliaire, alimentant des équipements du véhicule tel que l'éclairage, des capteurs. La deuxième batterie présente une tension nominale inférieure à la tension nominale de la batterie d'entraînement 36, par exemple au moins dix fois inférieure.

Le système d'entraînement 30 comprend un dispositif de chargement externe 45, lui-même relié à une source extérieure d'énergie électrique 48 ; par exemple lorsque le véhicule 20 stationne. Le dispositif de chargement externe 45 est connecté aux moyens de connexion 42, donc entre la pile à combustible 38 et le convertisseur DC/DC 40. Dans la présente configuration, le véhicule 20 est à l'arrêt, par exemple dans un bâtiment doté de la source d'énergie électrique, dite source extérieure 48, en ce sens qu'elle est extérieure au véhicule 20. La source extérieure 48 présente avantageusement une tension sensiblement égale à celle de la pile à combustible 38. Elle est une source extérieure de courant continu. Certaines fluctuations de tensions sont possibles.

En branchant la source extérieure 48 sur les moyens de connexion 42, il est possible d'utiliser une tension plus basse pour recharger la batterie d'entraînement 36. Une telle tension est plus répandue que celle de la batterie d'entraînement, et nécessite moins de sécurités. Par ailleurs, l'équipement du véhicule reste plus léger et plus compact. Il reste simple structurellement.

Le dispositif de chargement externe 45 comprend deux lignes, chacune reliée à une des lignes des moyens de connexion 42. Le dispositif de chargement externe 45 comprend en outre un appareillage de commande 46. L'appareillage de commande 46 est également appelé premier appareillage 46. Il est optionnellement bipolaire, ce qui permet de couper chacune des lignes du dispositif de chargement externe 45. Le système d'entraînement 30 est configuré pour sélectivement relier le convertisseur DC/DC 40 à la pile à combustible 38 ou à la source extérieure 48. L'appareillage de commande 46 permet une liaison au convertisseur DC/DC 40 tout en améliorant la sécurité de fonctionnement vis-à-vis de la pile à combustible 38.

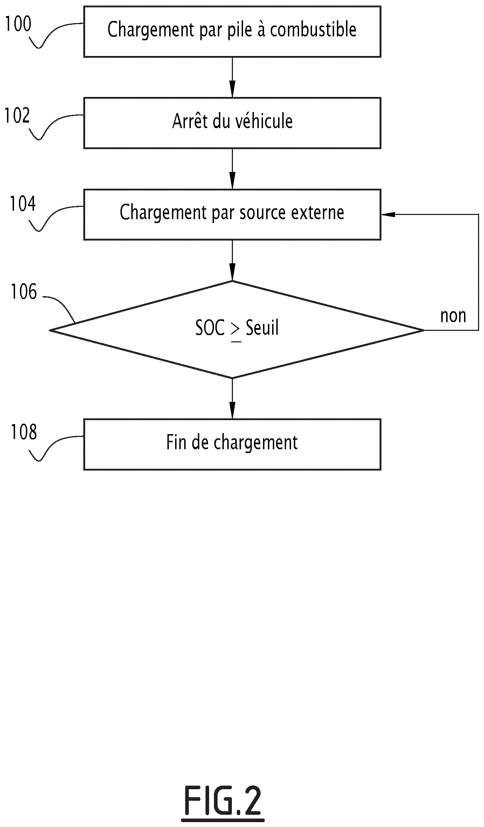

Ainsi, la source extérieure 48 est soit connectée électriquement au convertisseur DC/DC 40, soit en est coupée. L'appareillage de commande 46 est configuré de manière à ouvrir et à fermer une liaison électrique entre le convertisseur DC/DC 40 et la source extérieure 48. Il est piloté par un ordinateur 52 du véhicule 20. L'ordinateur 52 comprend un processeur (non représentée) et une mémoire (non représentée) sur laquelle est enregistré un programme d'ordinateur. Il peut être une carte électronique programmable. Le programme d'ordinateur comprend des instructions qui, lorsque le programme est exécuté par l'ordinateur 52, conduisent celui-ci à mettre en oeuvre un procédé de chargement tel que décrit en relation avec la figure 2.

L'appareillage de commande 46 comprend un contacteur bipolaire, ce qui permet d'ouvrir et fermer l'appareillage de commande 46 en charge. Alternativement, l'appareillage de commande 46 comprend un sectionneur bipolaire. Cette solution est optimisée pour ouvrir et fermer l'appareillage de commande 46 à vide.

Les moyens de connexion 42 comprennent un deuxième appareillage de commande 50. Le deuxième appareillage 50 est bipolaire. Ils permettent de relier à, ou de couper la pile à combustible 38 du convertisseur DC/DC 40. La pile à combustible 38 peut ainsi être isolée du reste du circuit électrique d'entraînement 54. Le deuxième appareillage 50 est piloté par l'ordinateur 52. L'ordinateur 52, et/ou généralement le système 30, sont configurés de sorte à actionner les appareillages 46 et 50 de manière à ce qu'ils soient ouverts ou fermés tour à tour dans le cadre du chargement de la batterie 36. Ainsi, le convertisseur DC/DC 40 est sélectivement branché à, et donc alimenté par, la pile à combustible 38 ou la source extérieure 48. L'ordinateur 52 est apte à envoyer des instructions d'ouverture et de fermeture, ou instruction de coupure et de connexion, aux appareillages 46 et 50.

Selon une variante de l'invention (non représentée), les moyens de connexion et le dispositif de chargement externe partagent une même ligne, par exemple la ligne négative. Le premier appareillage et le deuxième appareillage sont sur les lignes positives ; la ligne négative commune étant éventuellement libre d'appareillage de commande. Selon cette variante, les appareillages 46 et 50 sont unipolaires.

Le véhicule 20 comprend une enveloppe externe 56. Cette enveloppe externe 56 forme la peau du véhicule 20. Il peut s'agir d'une carrosserie, d'un fuselage. Le dispositif de chargement externe 45 comprend un connecteur d'interface 58 au niveau de l'enveloppe externe 56. Le connecteur d'interface 58 peut être une prise. Il peut être directement formé à la surface extérieure de l'enveloppe externe 56, ou être recouvert par un volet mobile formant ladite surface extérieure. Un opérateur peut ainsi brancher la source extérieure 48 au véhicule 20 via le connecteur d'interface 58.

La figure 2 représente le procédé de chargement d'un véhicule 20 comprenant un système d'entraînement 30. Le système d'entraînement 30, et optionnellement le véhicule 20, sont conformes à ceux présentés en relation avec la figure 1.

Le procédé comprend les étapes suivantes, effectuées selon la séquence présentée ci-dessous :
- chargement 100 de la batterie d'entraînement 36 par la pile à combustible 38 ;
- arrêt 102 du véhicule 20 ;
- chargement 104 de la batterie d'entraînement 36 par une source extérieure 48 via les moyens de connexion 42 ;
- comparaison 106 d'un niveau de charge (SOC) de la batterie d'entraînement 36 à un seuil de chargement prédéfini ;
- fin de chargement 108 si le niveau de charge (SOC) est suffisant.

Lors de l'étape de chargement 100 par la pile à combustible 38, le véhicule 20 peut circuler. La pile à combustible 38 peut alimenter le moteur d'entraînement 32, ou la batterie, ou les deux en même temps. A cette étape, la batterie 36 est chargée à une première puissance de chargement fournie par la pile à combustible 38.

A l'étape d'arrêt 102, le véhicule 20 est dans un bâtiment d'entretien, ou dans un parking. Le bâtiment peut être clos, si bien que l'arrêt du fonctionnement de la pile à combustible 38 est généralement recommandé. L'étape de chargement 100 par la pile à combustible 38 peut se prolonger pendant au moins une partie de l'étape d'arrêt 102.

Puis, à l'étape de chargement 104 par la source extérieure 48, le véhicule 20 est connecté à un réseau électrique extérieur ou réseau d'alimentation. La connexion peut être manuelle, ou effectuée automatiquement par un mécanisme de branchement motorisé. A l'étape de chargement 104 par la source extérieure 48, cette dernière fournit une deuxième puissance de chargement.

Lors de l'étape arrêt 102, le chargement électrique bascule de la pile à combustible 38 vers la source extérieure 48. Le procédé passe de l'étape de chargement 100 par la pile à combustible 38 à l'étape de chargement 104 par la source extérieure 48.

A l'issue de l'étape de comparaison 106, si l'état de charge (SOC) est supérieur ou égal au seuil prédéfini, l'étape de chargement 104 de la batterie d'entraînement 36 par la source extérieure 48 s'arrête lors de l'étape fin de chargement 108. Dans le cas contraire, ladite étape de chargement 104 par la source extérieure 48 continue. L'étape comparaison 106 peut s'effectuer en continu.

Avant ou à l'étape de chargement 104 par la source extérieure 48, le deuxième appareillage 50 s'ouvre, et coupe la liaison électrique entre la pile à combustible et le convertisseur DC/DC 40, et donc vers la batterie. Lors de l'étape de chargement 104 par la source extérieure 48, le premier appareillage 46 se ferme afin de relier électriquement la source extérieure 48 au convertisseur DC/DC 40, et à la batterie d'entraînement 36. Optionnellement, le deuxième appareillage 50 s'ouvre lorsque le premier appareillage 46 se ferme. Préférentiellement, le premier appareillage 46 se ferme après que le deuxième appareillage 50 ne coupe le circuit électrique d'entraînement. Cela permet de protéger la pile à combustible.

Selon une variante de l'invention, à l'étape chargement par la source extérieure, le véhicule est relié à un réseau fixe par une caténaire.

Selon une option de l'invention, certaines étapes s'effectuent en même temps. Par exemple, l'étape de comparaison peut s'effectuer pendant l'étape de chargement de la batterie d'entraînement par la source extérieure.

## Revendications

1. Système d'entraînement (30) de véhicule (20), notamment de véhicule ferroviaire, le système d'entraînement (30) comprenant :
- un moteur électrique d'entraînement (32), ledit moteur électrique d'entraînement (32) étant apte à entraîner le véhicule (20) ;
- un convertisseur DC/DC (40) ;
- une batterie d'entraînement (36) configurée pour alimenter le moteur électrique d'entraînement (32) et connectée au convertisseur DC/DC (40) ;
- une pile à combustible (38) apte à alimenter le moteur électrique d'entraînement (32) via le convertisseur DC/DC (40) ;
- des moyens de connexion (42) reliant la pile à combustible (38) au convertisseur DC/DC (40) ;
**caractérisé en ce qu'**il comprend en outre un dispositif de chargement externe (45) connecté aux moyens de connexion (42) et destiné à être relié à une source extérieure (48) de manière à recharger la batterie d'entraînement (36) via le convertisseur DC/DC (40), **en ce que** le dispositif de chargement externe (45) comprend un appareillage de commande (46) configuré pour couper ou relier le convertisseur DC/DC (40) à la source extérieure (48), et **en ce que** l'appareillage de commande (46) est un premier appareillage (46), les moyens de connexion (42) comprenant en outre un deuxième appareillage (50) configuré pour ouvrir et fermer les moyens de connexion (42) entre le convertisseur DC/DC (40) et la pile à combustible (38), le premier appareillage (46) et le deuxième appareillage (50) étant configurés de manière à sélectivement connecter le convertisseur DC/DC (40) à la pile à combustible (38) ou à la source extérieure (48).

2. Système d'entraînement (30) suivant la revendication 1, **caractérisé en ce que** l'appareillage de commande (46) comprend un contacteur.

3. Système d'entraînement (30) suivant la revendication 1, **caractérisé en ce que** l'appareillage de commande (46) comprend un sectionneur.

4. Système d'entraînement (30) suivant l'une quelconque des revendications précédentes, **caractérisé en ce que** le système (30) comprend en outre un onduleur (34) configuré pour charger la batterie d'entraînement (36) par récupération d'énergie cinétique via le moteur électrique d'entraînement (32).

5. Véhicule (20) comprenant un système d'entraînement (30) et une enveloppe externe (56), **caractérisé en ce que** le système d'entraînement (30) est conforme à l'une des revendications précédentes, et le dispositif de chargement externe (45) comprend un connecteur d'interface (58) au niveau de l'enveloppe externe (56) du véhicule (20).

6. Procédé de chargement d'un véhicule (20) comprenant un système d'entraînement (30), le système d'entraînement (30) comprenant :
- un moteur électrique d'entraînement (32), ledit moteur électrique d'entraînement (32) étant apte à entraîner le véhicule (20);
- un convertisseur DC/DC (40) ;
- une batterie d'entraînement (36) configurée pour alimenter le moteur électrique d'entraînement (32) et connectée au convertisseur DC/DC (40) ;
- une pile à combustible (38) apte à alimenter le moteur électrique d'entraînement (32) via le convertisseur DC/DC (40) ;
- des moyens de connexion (42) reliant la pile à combustible (38) au convertisseur DC/DC (40) ;
le procédé comprenant l'étape :
- chargement (100) de la batterie d'entraînement (36) par la pile à combustible (38);
**caractérisé en ce que** le procédé comprend en outre une étape de
- chargement (104) de la batterie d'entraînement (36) par une source extérieure (48) via les moyens de connexion (42).

7. Procédé selon la revendication 6, **caractérisé en ce que** le procédé comprend en outre une étape de comparaison (106) d'un niveau de charge (SOC) de la batterie d'entraînement (36) à un seuil de chargement prédéfini, l'étape de chargement (104) de la batterie d'entraînement (36) par la source extérieure (48) s'arrêtant lorsque le niveau de charge (SOC) est supérieur ou égal au seuil de chargement prédéfini.

8. Produit programme d'ordinateur comprenant des instructions qui, lorsque le programme est exécuté par un ordinateur (52), conduisent celui-ci à mettre en oeuvre le procédé de chargement selon la revendication 6 ou 7.
